# DEMANDE DE BREVET EUROPEEN

(11) **EP 1 911 640 A1**
(43) Date de publication de la demande: **16.04.2008**
(21) Numéro de dépôt: 07301405.2
(22) Date de dépôt: 27.09.2007
(51) Int. Cl.: B60S 1/04

(54) **Dispositif d'aménagement d'un ensemble d'essuie-glace de véhicule automobile**

(30) Priorité: 09.10.2006 FR 0654151
(71) Demandeur: PEUGEOT CITROËN AUTOMOBILES S.A., 78140 Vélizy Villacoublay (FR)
(72) Inventeur: Virgoulay, Christophe, 03200 Vichy (FR); Nardin, Emeric, 70400 Etobon (FR); Gavillon, Paul, 25490 Dampierre les Bois (FR)

(57) **Abrégé**

Ce dispositif comprend un mécanisme d'entraînement (14) d'un axe (13) d'un balai d'essuie-glace (12) et des moyens de support (16) de ce mécanisme d'entraînement (14) sur la caisse du véhicule.

Les moyens de support (16) comprennent au moins deux éléments de liaison (22, 24) avec la caisse, au moins un desdits éléments de liaison (22, 24)étant déformable, chacun étant lié à une branche (32, 42, 58) d'un carter (19) dudit mécanisme d'entraînement (14).

## Description

La présente invention concerne un dispositif d'aménagement d'un ensemble d'essuie-glace de véhicule automobile, du type comprenant un mécanisme d'entraînement d'un axe d'un balai d'essuie-glace et des moyens de support de ce mécanisme d'entraînement sur la caisse du véhicule.

Les recherches permanentes en matière de sécurité ont conduit depuis quelques années les constructeurs de véhicules à intégrer entre le mécanisme d'entraînement et la caisse des moyens permettant à ces mécanismes de s'escamoter en cas d'impact, afin de limiter la sévérité du choc que subirait un piéton dont la tête heurterait la partie externe de l'axe moteur de tels mécanismes.

Le document FR-A-2 838 692 décrit un système visant, en cas d'impact, à effacer le mécanisme d'essuie-glace dans un espace situé entre le capot et l'habitacle du véhicule, à la base du pare-brise, grâce à une plaque de support du mécanisme réalisée dans un matériau frangible.

Cependant, une telle fixation n'est guère industrialisable à la vue des efforts importants pouvant être appliqués sur cette zone, comme par exemple l'utilisation de balais d'essuie-glace de plus en plus longs donc de plus en plus lourds, ou encore l'existence de neige sur le pare-brise, risquant alors de rompre la plaque de support en l'absence de choc avec un piéton.

L'invention a pour but de remédier à ces inconvénients en proposant un dispositif permettant au mécanisme d'entraînement de s'affaisser en cas de choc avec un piéton, tout en garantissant un fonctionnement correct du balai d'essuie-glace en toutes circonstances d'utilisation.

A cet effet, l'invention a pour objet un dispositif d'aménagement d'un ensemble d'essuie-glace de véhicule automobile, du type précité, caractérisé en ce que les moyens de support comprennent au moins deux éléments de liaison avec la caisse, au moins un desdits éléments de liaison étant déformable, et en ce que chaque élément de liaison est lié à une branche d'un carter dudit mécanisme d'entraînement.

Suivant d'autres caractéristiques :
- les moyens de support comprennent trois éléments de liaison avec la caisse, un élément de liaison central, rigide et deux éléments de liaison respectivement intérieur et extérieur, déformables,
- les éléments de liaison intérieur et extérieur sont formés chacun par une plaque métallique comportant au moins une ligne de pliure préférentielle,
- chaque plaque métallique comporte une extrémité fixée sur la caisse et une autre extrémité reliée au carter du mécanisme d'entraînement par des organes de vissage,
- l'élément de liaison central est formé par une plaque métallique comportant au moins une extrémité fixée sur la caisse et une partie reliée au carter par un organe en élastomère de centrage, comme par exemple un bouchon en élastomère,
- la partie de l'élément centrale coopérant avec la branche du carter définit une surface sensiblement perpendiculaire aux extrémités des plaques métalliques déformables coopérant avec les autres branches du carter,
- la plaque métallique comprend deux extrémités de liaison avec une doublure de traverse inférieure de pare-brise, et une partie centrale située entre les deux extrémités de liaison comprenant un orifice destiné au montage en force de l'organe de centrage,
- le carter comprend des branches faisant saillie radiale par rapport à l'axe d'entraînement du balai d'essuie-glace, chaque branche comprenant une extrémité reliée audits moyens de support,
- le carter comprend des moyens de renfort permettant de transmettre les efforts d'un choc audits moyens de support de l'ensemble d'essuie-glace.

L'invention a également pour objet un véhicule automobile, caractérisé en ce qu'il comprend au moins un dispositif d'aménagement d'un ensemble d'essuie-glace tel que décrit précédemment.

L'invention sera mieux comprise à la lecture de la description qui va suivre, donnée uniquement à titre d'exemple et faite en se référant aux dessins annexés, dans lesquels :
- la Figure 1 est une vue schématique en coupe longitudinale verticale d'un véhicule automobile équipé d'un dispositif d'aménagement d'un ensemble d'essuie-glace selon l'invention ;
- la Figure 2 est une vue en perspective des moyens de support du dispositif d'aménagement de la Figure 1 ;
- la Figure 3 est une vue en perspective de l'élément de liaison central ;
- la Figure 4 est une vue en perspective de l'élément de liaison intérieur; et
- la Figure 5 est une vue en perspective de l'élément de liaison extérieur.

Dans tout ce qui suit, les orientations indiquées telles que «avant», «arrière», «longitudinal», «transversal», «intérieur» et «extérieur» correspondent à celles du véhicule.

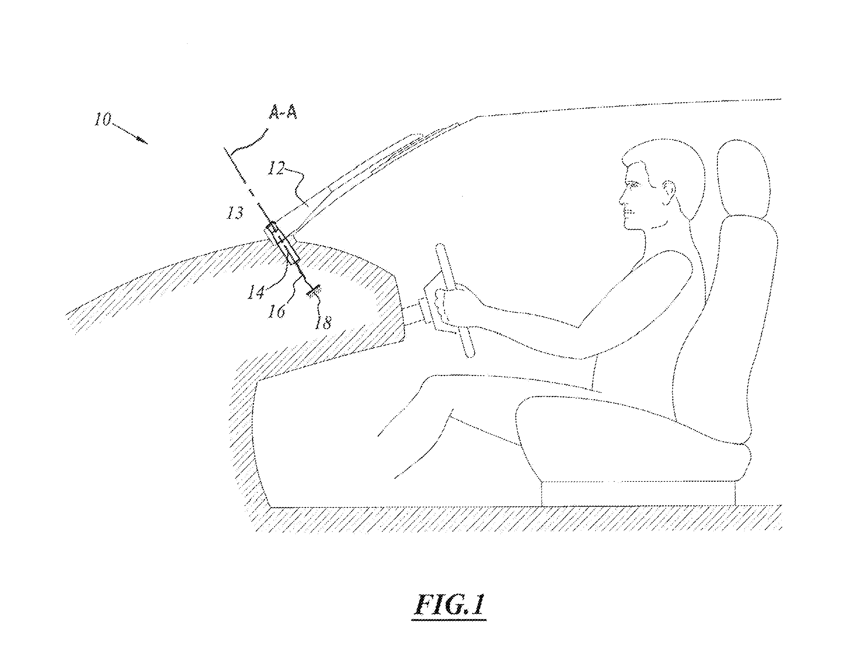

La Figure 1 représente, de façon schématique, un véhicule automobile 10 comportant un balai d'essuie-glace 12 entraîné par un axe moteur 13 lié à un mécanisme d'entraînement 14.

Dans un souci de clarté, un seul ensemble d'essuie-glace sera décrit dans ce qui suit. Il comprend un balai 12 d'essuie-glace entraîné en rotation autour d'un axe A-A s'étendant de façon coaxiale d'un axe moteur 13 lié à un mécanisme d'entraînement 14. Chaque balai 12 est ainsi associé à un mécanisme d'entraînement 14.

Le balai d'essuie-glace 12 est ainsi rendu oscillant en rotation autour de l'axe A-A, entre des positions sensiblement verticale et horizontale, au moyen de l'axe moteur 13, du mécanisme d'entraînement 14 de l'axe 13 et du moteur 17.

Le moteur 17 est commandé électriquement par un dispositif de commande non représenté qui reçoit en données d'entrée, la position angulaire du balai 12 par rapport à la glace sur laquelle il est en appui.

Le mécanisme d'entraînement 14 comprend un système à engrenage particulier contenu dans un carter 19 formant un moyen de support du moteur 17.

Le carter 19 comprend ainsi une ouverture dédiée au passage d'un axe lié au rotor du moteur 17, et une ouverture dédiée au passage de l'axe 13 d'entraînement du balai d'essuie-glace.

Le carter 19 est fixé sur des moyens de support désignés par la référence générale 16 et liés à la caisse 18 du véhicule 10.

D'une manière générale, les moyens de support 16 comprennent au moins deux éléments de liaison 22 et 24 avec la caisse 18, au moins un de ces éléments de liaison 22 et 24 étant déformable.

De manière générale encore, les moyens de support 16 comprennent au moins un élément de liaison 20 rigide, autour duquel l'ensemble d'essuie-glace est articulé lors d'un choc. La liaison rigide 20 est de préférence du type à rotule.

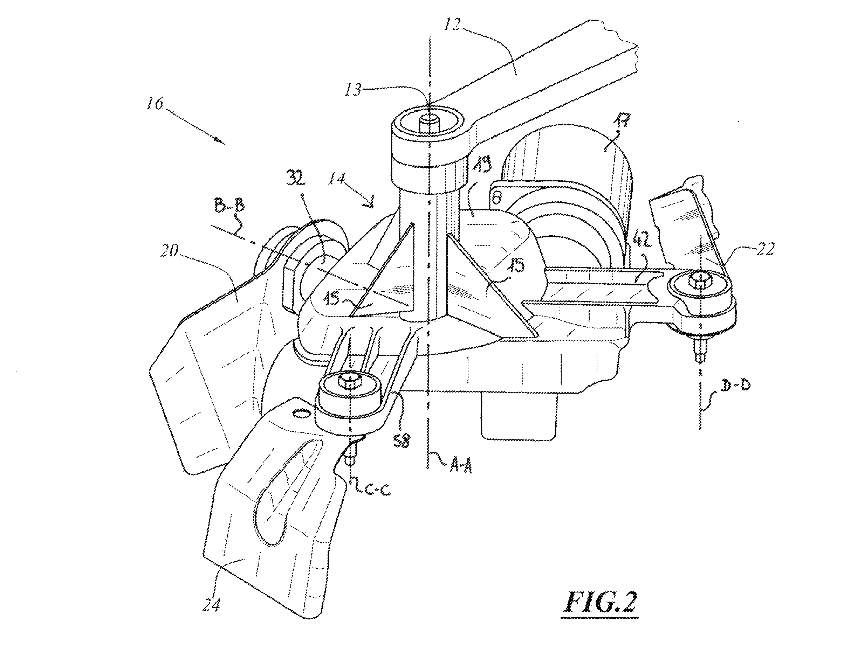

Selon un mode de réalisation préférentiel représenté à la Figure 2, les moyens de support 16 du carter 19 comprennent trois éléments de liaison du mécanisme d'entraînement 14 du balai d'essuie-glace 12 avec la caisse 18 du véhicule 10 :
- un premier élément de liaison central 20,
- un deuxième élément de liaison intérieur 22, et
- un troisième élément de liaison extérieur 24.

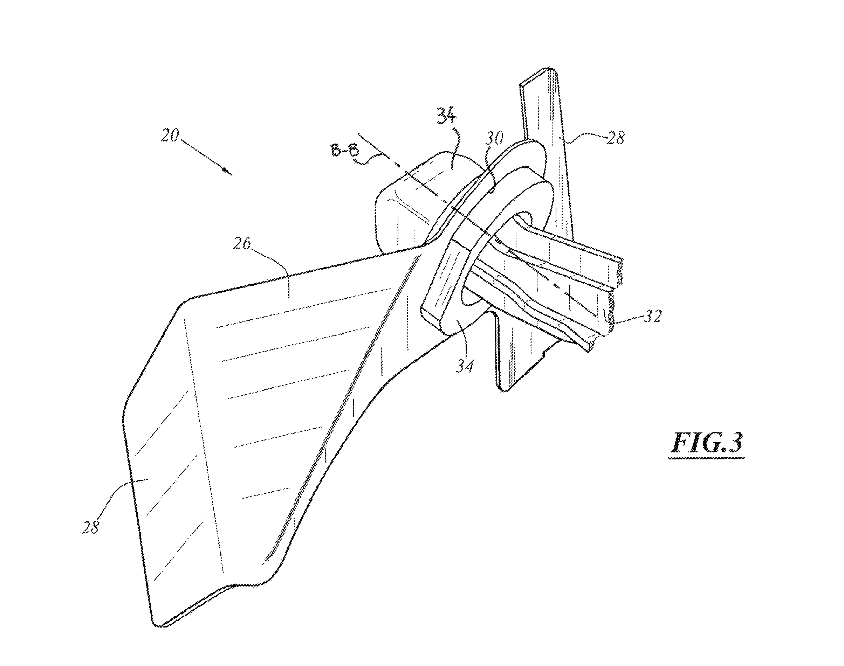

En référence à la Figure 3, l'élément de liaison central 20 est formé par une plaque métallique 26 rigide. La plaque métallique 26 comporte deux extrémités 28 fixées, par exemple par soudage, sur la caisse 18 du véhicule 10.

Plus particulièrement, la plaque 26 comporte des extrémités extérieure et intérieure 28 qui sont soudées directement à la caisse 18, sur une doublure de traverse inférieure (non représentée) de pare-brise.

Cette plaque métallique 26 est de plus munie en sa partie centrale d'un orifice circulaire 30 par lequel est insérée une branche 32 du carter 19.

La branche 32 est maintenue en position dans l'orifice 30 par un organe en élastomère de centrage, comme par exemple un bouchon en élastomère 34, qui permet, malgré la rigidité de l'élément central 20, une certaine souplesse de mouvement du mécanisme d'entraînement 14 du balai d'essuie-glace 12.

Le bouchon 34 définit un trou borgne au travers duquel est disposée l'extrémité de la branche 32 par le biais d'un montage en force. Le bouchon 34 en élastomère permet un mouvement de type à rotule de la branche 32 par rapport à la plaque 26.

La branche 32 s'étend en saillie hors du carter 19, le long d'un axe B-B disposé sensiblement parallèle à l'axe longitudinal du véhicule, de sorte que la branche 32 est positionnée dans l'orifice 30 selon un mouvement d'amenée d'avant vers l'arrière du véhicule.

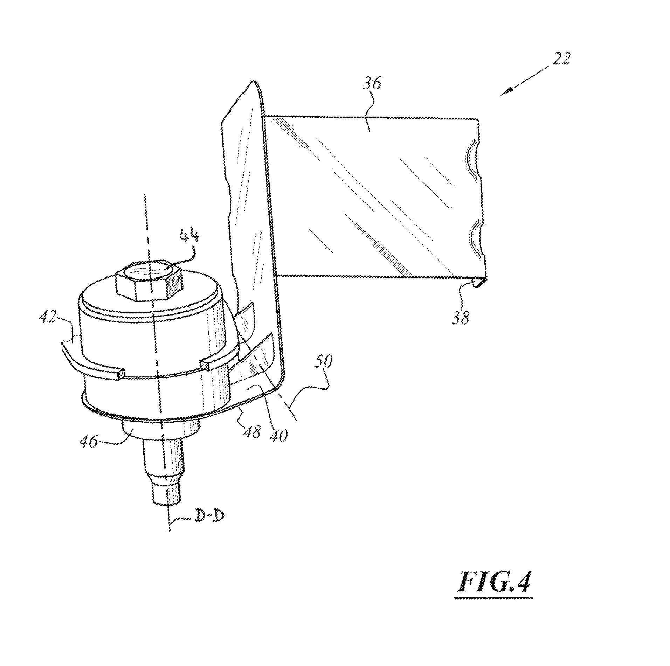

En référence maintenant à la Figure 4, l'élément de liaison intérieur 22 est formé par une plaque métallique 36 déformable, comme par exemple, une tôle. La plaque métallique 36 comporte une première extrémité 38 fixée, par exemple par soudage, sur la caisse 18 du véhicule 10. L'autre extrémité 40 de la plaque 36 est reliée à une branche 42 du carter 19, l'extrémité 40 et la branche 42 étant toutes les deux adaptées pour recevoir un organe de vissage comprenant une vis 44 et un écrou 46 soudé sur la face inférieure 48 de l'extrémité 40. La vis 44 s'étend le long d'un axe D-D orienté de façon sensiblement verticale au véhicule, rendant à l'opérateur situé en bord de ligne de montage, plus aisé le montage de la branche 42 sur le moyen de support 16.

L'extrémité 40 de l'élément de liaison intérieur 22 susmentionné s'étend de façon sensiblement inclinée vers le haut de sorte que la branche 42 du carter 19 est disposée en appui sur l'extrémité 40, cette dernière portant ainsi le carter 19 du mécanisme d'entraînement 14.

La plaque métallique 36 comprend en outre une ligne de pliure préférentielle 50 selon laquelle l'élément de liaison intérieur 22 se déforme lors d'un choc avec un piéton, la ligne de pliure étant sensiblement perpendiculaire à l'axe D-D.

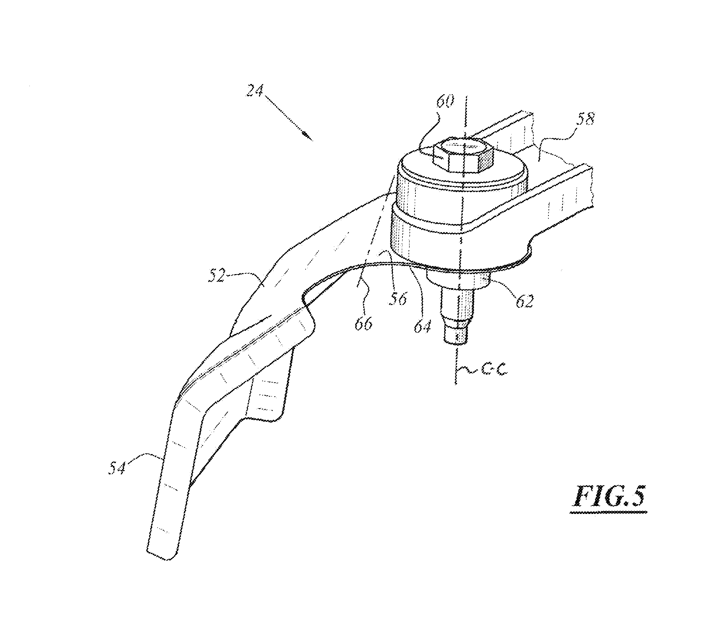

De manière similaire, en référence maintenant à la Figure 5, l'élément de liaison extérieur 24 est formé par une plaque métallique 52 déformable, comme par exemple une tôle. La plaque métallique 52 comporte une première extrémité 54 fixée, par exemple par soudage, sur la caisse 18 du véhicule 10. L'extrémité 54 s'étend de façon sensiblement verticale et est disposée en appui contre la caisse 18 formant une doublure d'aile (non représentée) du véhicule.

L'autre extrémité 56 de la plaque 52 est reliée à une branche 58 du carter 19 du mécanisme d'entraînement 14, l'extrémité 56 et la branche 58 étant toutes les deux adaptées pour recevoir un organe de vissage comprenant une vis 60 et un écrou 62 soudé sur la face inférieure 64 de l'extrémité 56. La vis 60 s'étend le long d'un axe C-C orienté de façon sensiblement verticale au véhicule, rendant à l'opérateur situé en bord de ligne de montage, plus aisé le montage de la branche 58 sur le moyen de support 16.

La plaque métallique 52 comprend en outre une ligne de pliure préférentielle 66 selon laquelle l'élément de liaison extérieur 24 se déforme lors d'un choc avec un piéton, la ligne de pliure étant sensiblement perpendiculaire à l'axe C-C.

L'extrémité 56 de l'élément de liaison intérieur 24 susmentionné s'étend de façon sensiblement inclinée vers le haut de sorte que la branche 58 du carter 19 est disposée en appui sur l'extrémité 56, cette dernière portant ainsi le carter 19 du mécanisme d'entraînement 14.

Les extrémités 40 et 56 des liaisons interne 22 et externe 24 forment des zones planes dédiées à l'appui des branches 42 et 58 du carter 19. Les extrémités 40 et 56 sont de préférence parallèles l'une à l'autre de sorte que l'effort d'un choc avec un piéton est réparti sur les deux liaisons 22 et 24 déformable, à part égale. Pour cela, le carter 19 du mécanisme d'entraînement 14 comprend des éléments 15 de renfort liant une partie cylindrique formant un palier à l'axe 13 à une face supérieure du carter 19. Chaque élément 15 de renfort est destiné à transmettre les efforts reçus par la partie formant palier à la face supérieure du carter 19 en saillie duquel s'étendent les branches 32, 42 et 58.

De préférence, la partie supérieure du carter 19, les éléments de renfort 15 et les branches 32, 42 et 58 sont réalisés d'un seul tenant selon un procédé de moulage d'un matériau à base d'acier.

Dans ce qui suit sera décrit le procédé de montage de l'ensemble d'essuie-glace sur une caisse 18 de véhicule automobile, laquelle comprend au préalable les moyens de support 16 précédemment détaillés.

Un opérateur situé en bord de ligne de montage saisit un ensemble d'essuie-glace stocké en bord de ligne d'assemblage. La branche 32 est disposée dans l'orifice 30 de la liaison centrale 20. Le bouchon 34 est emmanché en force dans l'orifice 30. L'opérateur guide le mécanisme d'entraînement 14 vers le bas afin d'amener les branches 42 et 58 en appui contre les extrémités 40 et 56 dudit moyen de support 16. II procède par la suite au serrage des deux vis 44 et 60 pour parfaire le montage de l'ensemble d'essuie-glace.

Selon une variante de réalisation, chaque élément de liaison 20, 22 ou 24 est obtenu directement par emboutissage d'éléments de caisse 18. L'élément de liaison 20 et la doublure de traverse inférieure de pare-brise ne forment alors qu'une seule pièce. De manière similaire, l'élément de liaison 24 et la doublure d'aile ne forment qu'une seule pièce. Les éléments de liaison sont alors venus de matière des éléments de caisse 18.

Ainsi, lorsque la tête d'un piéton heurte la partie externe de l'axe moteur 13 du mécanisme d'essuie-glace 14, les éléments de liaison intérieur 22 et extérieur 24 se déforment selon leur ligne de pliure préférentielle, respectivement 50 et 66, permettant au mécanisme d'essuie-glace 14 de s'affaisser et donc d'amortir le choc subi par le piéton.

Parallèlement, dans des conditions d'utilisation normales, la rigidité de l'élément central 20 permet de garantir un bon fonctionnement du balai d'essuie-glace 12 même lorsque le mécanisme d'entraînement 14 est soumis à des contraintes relativement élevées telles que le poids des balais d'essuie-glace ou encore la présence de neige sur le pare-brise.

Le dispositif selon l'invention permet donc de limiter la sévérité du choc que subirait un piéton en déformant le support du balai d'essuie-glace, et d'assurer en même temps une prestation optimale du balai d'essuie-glace en temps normal.

## Revendications

1. Dispositif d'aménagement d'un ensemble d'essuie-glace de véhicule automobile (10), ledit ensemble d'essuie-glace comprenant un mécanisme d'entraînement (14) d'un axe (13) d'un balai d'essuie-glace (12) et des moyens de support (16) de ce mécanisme d'entraînement (14) sur la caisse (18) du véhicule (10), **caractérisé en ce que** les moyens de support (16) comprennent au moins deux éléments de liaison (22, 24) avec la caisse (18), au moins un desdits éléments de liaison (22, 24) étant déformable, et **en ce que** chaque élément de liaison est lié à une branche (32, 42, 58) d'un carter (19) dudit mécanisme d'entraînement (14).

2. Dispositif selon la revendication 1, **caractérisé en ce que** les moyens de support (16) comprennent trois éléments de liaison (20, 22, 24) avec la caisse (18), un élément de liaison central (20), rigide et deux éléments de liaison respectivement intérieur (22) et extérieur (24), déformables.

3. Dispositif selon la revendication 2, **caractérisé en ce que** les éléments de liaison intérieur (22) et extérieur (24) sont formés chacun par une plaque métallique (36, 52) comportant au moins une ligne de pliure préférentielle (50, 66).

4. Dispositif selon la revendication 3, **caractérisé en ce que** chaque plaque métallique (36, 52) comporte une extrémité (38, 54) fixée sur la caisse (18) et une autre extrémité (40, 56) reliée au carter (19) du mécanisme d'entraînement (14) par des organes de vissage (44 ; 46, 60 ; 62).

5. Dispositif selon l'une quelconque des revendications 2 à 4, **caractérisé en ce que** l'élément de liaison central (20) est formé par une plaque métallique (26) comportant au moins une extrémité (28) fixée sur la caisse (18) et une partie reliée au carter (19) par un organe en élastomère de centrage, comme par exemple un bouchon en élastomère (34).

6. Dispositif selon la revendication 5, **caractérisé en ce que** la partie de l'élément centrale (20) coopérant avec la branche (32) du carter (19) définit une surface sensiblement perpendiculaire aux extrémités (40, 56) des plaques métalliques (36, 52) déformables coopérant avec les autres branches (42, 58) du carter (19).

7. Dispositif selon la revendication 5 ou 6, **caractérisé en ce que** la plaque métallique (26) comprend deux extrémités (28) de liaison avec une doublure de traverse inférieure de pare-brise, et une partie centrale située entre les deux extrémités (28) de liaison comprenant un orifice (30) destiné au montage en force de l'organe de centrage (34).

8. Dispositif selon l'une quelconque des revendications 4 à 7, **caractérisé en ce que** le carter (19) comprend des branches (32, 42, 58) faisant saillie radiale par rapport à l'axe (13) d'entraînement du balai d'essuie-glace (12), chaque branche comprenant une extrémité reliée audits moyens de support (16).

9. Dispositif selon l'une quelconque des revendications 1 à 8, **caractérisé en ce que** le carter (19) comprend des moyens (15) de renfort permettant de transmettre les efforts d'un choc audits moyens (16) de support de l'ensemble d'essuie-glace.

10. Véhicule automobile (10), **caractérisé en ce qu'**il comprend au moins un dispositif d'aménagement d'un ensemble d'essuie-glace selon l'une quelconque des revendications précédentes.
